# EUROPEAN PATENT APPLICATION

(11) **EP 4 663 834 A1**
(43) Date of publication of application: **17.12.2025**
(21) Application number: 25181251.7
(22) Date of filing: 06.06.2025
(51) Int. Cl.: D06F 34/18, D06F 103/10

(54) **DRYNESS SENSING DEVICE**

(30) Priority: 10.06.2024 KR 20240074746
(71) Applicant: LG Electronics Inc., Yeongdeungpo-gu Seoul 07336 (KR)
(72) Inventor: PARK, Hyunjin, Seoul (KR); KIM, Mangeun, Seoul (KR); KANG, Byeonggeun, Seoul (KR)
(74) Representative: Schott, Jakob Valentin

(57) **Abstract**

A dryness sensing device configured to sense a dryness of a laundry according to an embodiment of present disclosure may comprise a case having a length and a thickness; a first sensor disposed on a first side of the case and configured to measure a resistance to sense a surface dryness of the laundry; and a second sensor is disposed on a second side of the case facing the first side and configured to measure a capacitance to sense an internal dryness of the laundry, wherein the first sensor and an electrode plate provided in the second sensor are arranged so as not to overlap each other in a thickness direction of the case.

## Description

### BACKGROUND OF THE INVENTION

### 1.Field of the Invention

The present disclosure relates to a dryness sensing device that measures the dryness of laundry, and more specifically, to a dryness sensing device having a hybrid structure.

### 2. Discussion of the Related Art

A washing dryer is a device that dries washed laundry. The washing dryer is generally used when laundry has moisture after the washing process. The Washing dryer removes this moisture to keep laundry dry and comfortable to use.

The washing dryer is equipped with a dryness sensor to determine the drying state of laundry. The dryness sensor measures the humidity of the laundry, and the measured humidity may be used to determine the drying state of the laundry.

Conventional dryness sensor were able to measure the humidity on the surface of laundry, but could not accurately measure the humidity inside the laundry. If the humidity inside the laundry is not accurately measured, only the surface of the laundry is dried and the inside of the laundry is not dried, causing a problem in which the dryer cannot function properly.

### SUMMARY OF THE INVENTION

The purpose of the present disclosure may be to determine the exact dryness of the surface and inside of the laundry when using two types of sensors to determine the surface humidityof the laundry and the humidity of inside the laundry inside the dryer.

The purpose of the present disclosure is to prevent signal interference between the two sensors when using two types of sensors to determine the surface humidityof the laundry and the humidity of inside of the laundry inside the dryer, and to accurately determine the dryness of the surface and inside of the laundry.

A dryness sensing device configured to sense a dryness of a laundry according to an embodiment of present disclosure may comprise a case having a length and a thickness; a first sensor disposed on a first side of the case and configured to measure a resistance to sense a surface dryness of the laundry; and a second sensor is disposed on a second side of the case facing the first side and configured to measure a capacitance to sense an internal dryness of the laundry, wherein the first sensor and an electrode plate provided in the second sensor are arranged so as not to overlap each other in a thickness direction of the case.

A dryness sensing device configured to sense a dryness of a laundry according to an embodiment of present disclosure may a case having a length and a thickness; a first sensor disposed on a first side of the case and configured to measure a resistance to sense a surface dryness of the laundry; and a second sensor is disposed on a second side of the case facing the first side and configured to measure a capacitance to sense an internal dryness of the laundry, wherein the second sensor further comprises a shield formed to cover an electrode plate included in the second sensor.

According to an embodiment of the present disclosure, the impact of the electric field generated by the first sensor 120 on the electrode plate 131 may be minimized due to the structure where the first sensor 120 does not overlap with the electrode plate 131 and the shield 133 covering the electrode plate 131.

Accordingly, there is an effect that various characteristics of the targets of the first sensor 120 and the second sensor 130 may be measured simultaneously. In particular, not only the surface humidity of the laundry but also the internal humidity of the laundry may be measured, making it possible to confirm the drying progress more accurately.

### BRIEF DESCRIPTION OF THE DRAWINGS

FIGS. 1A to 1C are diagrams illustrating the configuration of a dryness sensing device according to an embodiment of the present disclosure.
FIGS. 2A and 2B are diagrams showing a cross section of the dryness sensing device 100 of FIG. 1A cut in the direction A1 to A2.
FIGS. 3A and 3B are diagrams illustrating the arrangement structure of an electrode plate and a shield according to an embodiment of the present disclosure.
FIGS. 3C and 3D are diagrams illustrating a process of measuring the humidity of a target through a second sensor and a process of applying a voltage waveform with the same magnitude and phase to the second sensor and the shield according to an embodiment of the present disclosure.
FIGS. 4A and 4B are diagrams showing a state in which a dryness sensing device according to an embodiment of the present disclosure is mounted inside a dryer.
FIGS. 5A to 5C are diagrams illustrating the effect on the second sensor as voltage is applied to the first sensor when the dryness sensing device does not have a shield and when the dryness sensing device has a shield.

### DETAILED DESCRIPTION OF THE PREFERRED EMBODIMENTS

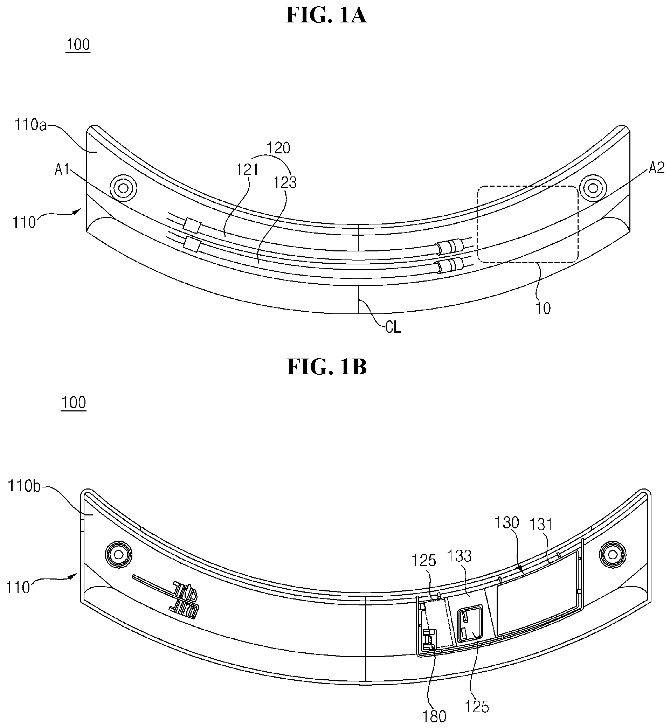

FIGS. 1A to 1C are diagrams illustrating the configuration of a dryness sensing device according to an embodiment of the present disclosure.

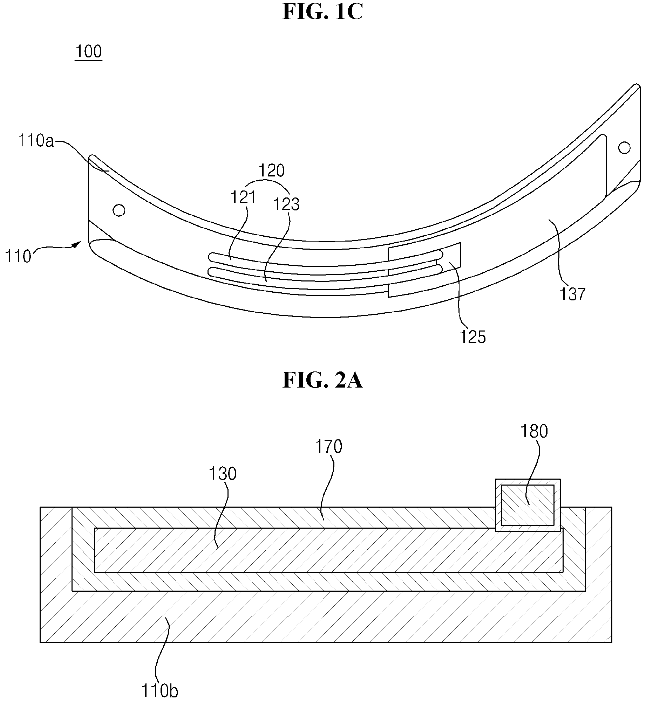

FIG. 1A is a diagram for illustrating the structure of a first side of the dryness sensing device 100, and FIG. 1B is a structure that projects the inside of the second side facing the first side of the dryness sensing device 100. This is a drawing for explanation, and FIG. 1C is a drawing projecting the inside of the dryness sensing device 100.

Hereinafter, the dryness sensing device 100 may be applied inside a dryer having a drying function, but is not limited thereto, and may also be applied inside a laundry processing device having a washing function and a drying function.

The first side may be the front side of the dryness sensing device 100, and the second side may be the back side of the dryness sensing device 100, but this is only an example.

The dryness sensing device 100 is provided in a dryer that dries laundry and may sense the dryness of the laundry.

Referring to FIGS. 1A to 1C , the dryness sensing device 100 may include a case 110, a first sensor 120, and a second sensor 130.

The case 110 may accommodate the first sensor 120, the second sensor 130, a shield 133, and a sensing circuit 135. The case 110 has a length and a thickness and may be formed to be rounded in a longitudinal direction. The case 110 may extend by a certain length in the longitudinal direction and by a certain thickness in a thickness direction. The length of case 110 may have a value greater than the thickness.

The case 110 may include a front case 110a and a rear case 110b.

Each of the front case 110a and the rear case 110b may have the same rounded shape to be installed inside the dryer. Each of the front case 110a and the rear case 110b may have a shape with a constant curvature in the longitudinal direction.

The front case 110a and the rear case 110b may be installed inside the dryer while being fastened by a fastening member.

The first sensor 120 may be provided on the front case 110a and exposed to the outside. The first sensor 120 and laundry may contact with each other during the drying process.

The first sensor 120 may include a first electrode 121 and a second electrode 123. Each of the first electrode 121 and the second electrode 123 included in the first sensor 120 may be formed to intersect a center line CL of the front case 110a. The direction of the center line CL may be the thickness direction of the front case 110a.

The first electrode 121 and the second electrode 123 may also have a round shape like the shape of the case 110. Each of the first electrode 121 and the second electrode 123 may extend in the longitudinal direction of the front case 110a.

One side of each of the first electrode 121 and the second electrode 123 may extend longer than the other side of each of the first electrode 121 and the second electrode 123 with respect to the center line CL.

In one embodiment, the second sensor 130 may include an electrode plate 131, a shield 133, and a substrate 137.

In another embodiment, the second sensor 130 may include an electrode plate 131, a shield 133, a sensing circuit 135, and a substrate 137.

An electrode plate 131, a shield 133, and a sensing circuit 135 may be mounted on the substrate 137. The substrate 137 may include an insulating layer.

The substrate 137 may be a printed circuit board (PCB).

The first sensor 120 may be used to measure the internal humidity of laundry.

The first electrode 121 may be an electrode to which a voltage is applied, and the second electrode 123 may be a ground electrode. The sensing circuit 135 may apply a direct current voltage to the first electrode 121 to measure the current flowing between the first electrode 121 and the second electrode 123. The sensing circuit 135 may measure resistance value through the measured current and applied voltage, and obtain an electrical conductivity using the measured resistance value. The sensing circuit 135 may calculate the electrical conductivity from the resistance value through a known relational equation.

The sensing circuit 135 may obtain the dryness or humidity of the laundry using the measured electrical conductivity. The dryness and the humidity may be inversely proportional to each other.

The sensing circuit 135 may include a memory (not shown) that stores a table representing a matching relationship between the electrical conductivity and the dryness or the electrical conductivity and the humidity, and the dryness or the humidity may be obtained from resistance using the table..

The second sensor 130 may be a cap(capacitive) sensor used to measure the humidity or dryness of laundry by measuring capacitance. The second sensor 130 may measure the internal capacitance of the laundry using the change in dielectric constant. The second sensor 130 may measure the internal dryness of laundry placed in the capacitance sensing area 10.

The second sensor 130 may include one or more electrode plates. The second sensor 130 may measure the capacitance between the electrode plate and the inside of the laundry without a separate ground. The second sensor 130 may measure a change in capacitance through a virtual ground formed inside a drum provided in the dryer.

The sensing circuit 135 may obtain the humidity of inside of the laundry using the capacitance measured through the electrode plate 131.

The shield 133 may be a member to prevent interference with electric field generated from each of the first sensor 120 and the second sensor 130. The shield 133 may be a member to prevent interference with electric field generated from each of the first sensor 120 and the electrode plate 131.

The shield 133 may be formed to cover the electrode plate 131. The shield 133 may be made of the same material as the electrode plate. The specific arrangement structure of the shield 133 will be described later.

A cavity 125 may be formed inside the case 110. The cavity 125 may be a space for connecting the first sensor 120 and the sensing circuit 135.

The shield 133 may be formed to surround the electrode plate 131 and the cavity 125. The specific arrangement structure of the shield 133 will be described later.

The sensing circuit 135 may apply a constant voltage to the first electrode 121 of the first sensor 120 and measure a current flowing between the first electrode 121 and the second electrode 123.

The sensing circuit 135 may obtain the humidity or dryness of the surface of the laundry based on the resistance measured through the first sensor 120.

The sensing circuit 135 may obtain the internal humidity of the laundry based on a measurement signal corresponding to the capacitance measured through the second sensor 130.

The sensing circuit 135 may include a microcomputer (not shown) and a regulator (not shown).

The microcomputer may generally control the operation of the dryness sensing device 100. The regulator may convert the voltage supplied from the dryer into a voltage that may be used in the dryness sensing device 100. Noise may be eliminated due to the regulator's constant voltage output. The regulator may be a low drop-output (LDO) circuit.

The dryness sensing device 100 may further include a connector 180. The sensing circuit 135 may transmit data measured through the first sensor 120 (e.g., surface humidity of the laundry) and data measured through the second sensor 130 (e.g., internal humidity of the laundry) to a control circuit (not shown) through the connector 180. The control circuit may be a circuit that controls the overall operation of the dryer.

The control circuit may adjust one or more of a driving time of the dryer or a driving intensity of the dryer based on the surface humidity of the laundry and the internal humidity of the laundry received from the dryness sensing device 100.

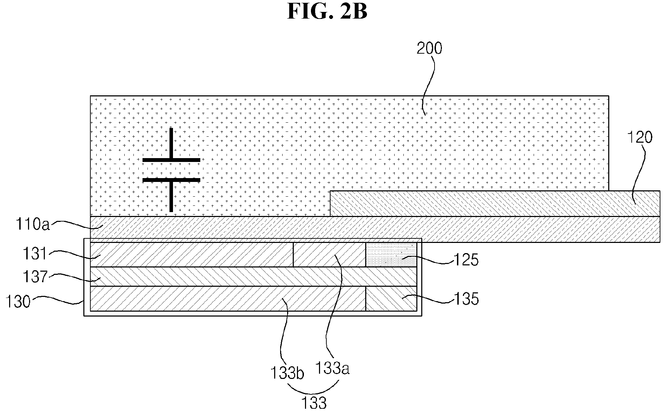

FIGS. 2A and 2B are diagrams showing a cross section of the dryness sensing device 100 of FIG. 1A cut in the direction A1 to A2.

In each of FIGS. 2A and 2B , some components of the dryness sensing device 100 are omitted.

Referring to FIG. 2A, the dryness sensing device 100 may include a rear case 110b, the second sensor 130, a waterproof layer 170, and the connector 180.

The waterproof layer 170 has a waterproof function and may cover the second sensor 130. The connector 180 may also be covered with a waterproof layer.

The connector 180 may be a connection interface for communication between the sensing circuit 135 and an external circuit. The connector 180 may transmit data measured by the sensing circuit 135 to the main control circuit. The connector 180 may be connected to or mounted on one end of the second sensor 130.

Referring to FIG. 2B, the first sensor 120 may be disposed on the first side of the front case 110a. The first sensor 120 may be arranged to extend in the longitudinal direction of the first side of the front case 110a.

The first sensor 120 may measure the surface humidity of the target 200 through a resistance measurement method. Target 200 may be laundry. The first sensor 120 may measure the current flowing between the first electrode 121 and the second electrode 123 and calculate resistance through the measured current. The first sensor 120 may obtain the electrical conductivity based on the calculated resistance, and may obtain the humidity or dryness of the surface of the laundry based on the obtained electrical conductivity.

The second sensor 130 may be disposed on the second side facing the first side of the front case 110a. The second sensor 130 may include the electrode plate 131, the shield 133, the sensing circuit 135, and the substrate 137. The electrode plate 131 may be disposed on the second side of the front case 110a.

The electrode plate 131 and the first sensor 120 may be arranged to face each other based on the thickness direction of the front case 110a. The electrode plate 131 may be formed so as not to overlap the first sensor 120. The electrode plate 131 may be formed so as not to overlap the first sensor 120 and the front case 110a in the thickness direction.

The electrode plate 131 may be arranged so as not to overlap the first sensor 120 in the thickness direction intersecting the longitudinal direction in which the front case 110a extends.

The electrode plate 131 is arranged so as not to overlap the first sensor 120 and the front case 110a in the thickness direction, and may be arranged as close to each other as possible in the length direction of the front case 110a. This is to measure the humidity of the same laundry through two sensors.

The shield 133 may be formed to cover the electrode plate 131. The shield 133 may be a shielding member that prevents the electric field generated by the first sensor 120 from affecting the electrode plate 131. The shield 133 may be a shielding member that prevents the electric field generated by the electrode plate 131 from affecting the first sensor 120 .

The shield 133 may include a first shield electrode 133a and a second shield electrode 133b. The first shield electrode 133a may be formed to cover the side surface of the second sensor 130, and the second shield electrode 133b may be formed to cover the rear surface of the second sensor 130.

The second shield electrode 133b may cover the substrate 137 on which the electrode plate 131 is mounted, and may cover the rear surface of the electrode plate 131.

The first shield electrode 133a may be disposed on the same horizontal plane as the electrode plate 131. The first side of the first shield electrode 133a may face the front case 110a, and the second side facing the first side of the first shield electrode 133a may face the first side of the substrate 137. The second shield electrode 133b may be disposed on a second side facing the first side of the substrate 137 .

A portion of the area formed by the second sensor 130 may be arranged to partially overlap the area formed by the first sensor 120 and in the thickness direction of the front case 110a. However, the area formed by the electrode plate 131 included in the second sensor 130 and the area formed by the first sensor 120 may not overlap in the thickness direction of the front case 110a.

The sensing circuit 135 may be placed on one side of the shield 133.

The first sensor 120 may be connected to the sensing circuit 135 through the cavity 125. In the cavity 125, a wire for connecting the sensing circuit 135 and the first sensor 120, a wire for connecting the sensing circuit 135 and the electrode plate 131, a plurality of pins, and a ground may be formed.

According to an embodiment of the present disclosure, the impact of the electric field generated by the first sensor (120) on the electrode plate (131) can be minimized due to the structure where the first sensor (120) does not overlap with the electrode plate (131) and the shield (133) covering the electrode plate (131).

Accordingly, there is an effect that various characteristics of the targets of the first sensor 120 and the second sensor 130 may be measured simultaneously. In particular, not only the surface humidity of the laundry but also the internal humidity of the laundry may be measured, making it possible to confirm the drying progress more accurately.

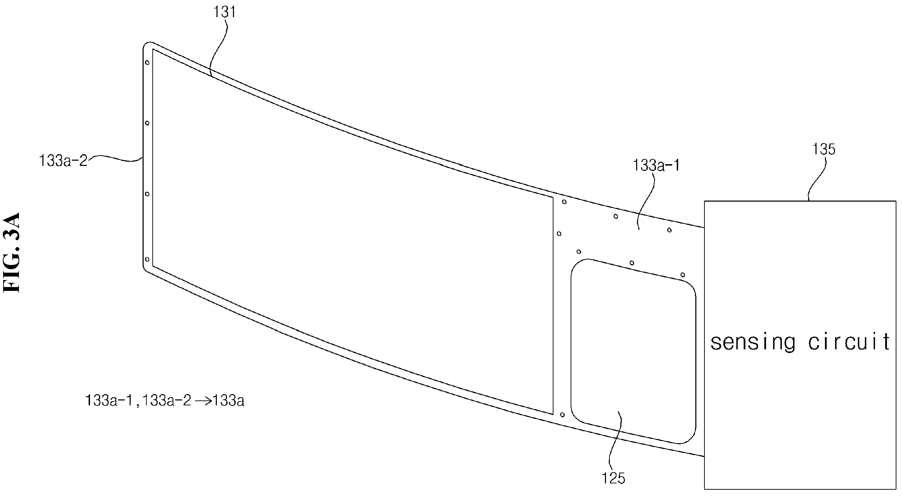

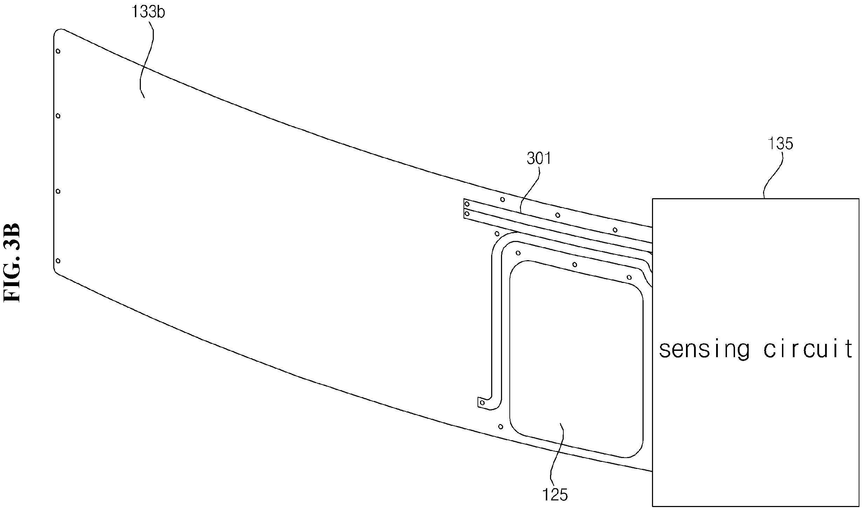

FIGS. 3A and 3B are diagrams illustrating the arrangement structure of an electrode plate and a shield according to an embodiment of the present disclosure.

FIG. 3A is a diagram illustrating the arrangement structure of the first shield electrode 133a disposed adjacent to the first side of the electrode plate 131, and FIG. 3B is a diagram illustrating the arrangement structure of of the second shield electrode 133b disposed on the second side facing the first side of the electrode plate 131.

Referring to FIG. 3A, the first shield electrode 133a may include a right shield electrode 133a-1 disposed on the right side of the electrode plate 131 and a left shield electrode 133a-2 disposed on the left side of the electrode plate 131.

The right shield electrode 133a-1 may be formed to surround the cavity 125. The cavity 125 may be a space for connecting the sensing circuit 135 and the first sensor 120. The cavity 125 may have a square shape, but this is only an example and may be provided in various shapes. The shape of the right shield electrode 133a-1 may also vary depending on the shape of the cavity 125.

The right shield electrode 133a-1 may be disposed adjacent to the sensing circuit 135.

The second sensor 130 may include one or more electrode plates. That is, a plurality of electrode plates may be provided at the location where the electrode plate 131 is disposed.

When the second sensor 130 has a plurality of electrode plates, one of the plurality of electrode plates may be used to measure the internal humidity of the laundry, and the remaining electrode plates may be used to measure other characteristics of the laundry.

That is, when the second sensor 130 is provided with the plurality of electrode plates, the remaining electrode plates except for the electrode plate used to measure the internal humidity of the laundry among the plurality of electrode plates may be used for preliminary purpose.

When the second sensor 130 includes three electrode plates, the three electrode plates may include a central electrode plate disposed in the center, an upper electrode plate disposed above the central electrode plate, and a lower electrode plate disposed below the central electrode plate. The area of the central electrode plate may be larger than the area of the upper electrode plate and the area of the lower electrode plate, respectively. Each electrode plate may be used to determine the characteristics of the target.

Referring to FIG. 3B, a second shield electrode 133b disposed on the second side of the electrode plate 131 is shown. The second shield electrode 133b may be formed to cover the second side of the electrode plate 131.

Each of the first shield electrode 133a and the second shield electrode 133b included in the shield 133 may be made of the same material as the electrode plate 131.

The same voltage as that applied to the electrode plate 131 may be applied to the shield 133. Specifically, the sensing circuit 135 may apply a voltage to the shield 133 that has the same amplitude and phase as the voltage applied to the electrode plate 131.

When the shield 133 and the electrode plate 131 are composed of electrode made of the same material, and a voltage with the same amplitude and phase applied to the shield 133 and the electrode plate 131 is applied, the shield 133 may be referred to as an active shield.

Meanwhile, the sensing circuit 135 may include connection lines 301 for electrical connection with the electrode plate 131 and the shield 133.

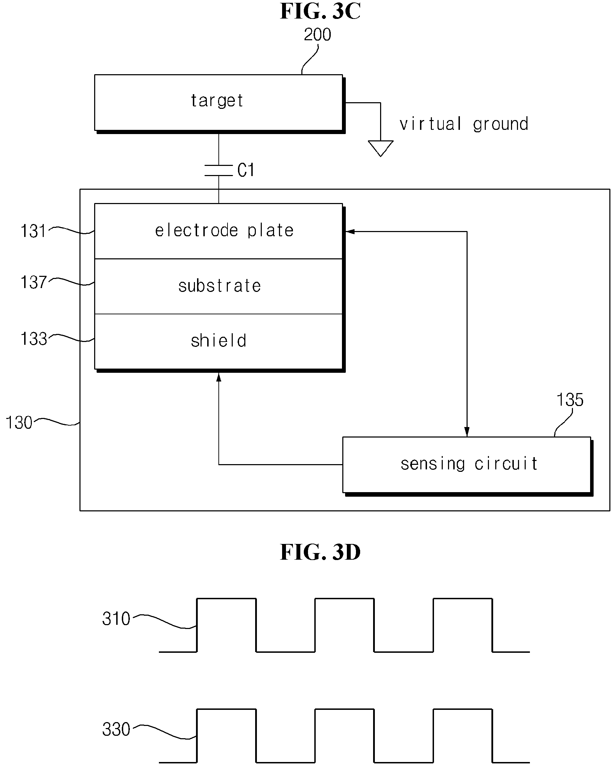

FIGS. 3C and 3D are diagrams illustrating a process of measuring the humidity of a target through a second sensor and a process of applying a voltage waveform with the same magnitude and phase to the second sensor and the shield according to an embodiment of the present disclosure.

The substrate 137 may be disposed between the electrode plate 131 and the shield 133.

Referring to FIG. 3C, the sensing circuit 135 may apply a voltage to the electrode plate 131 to measure the humidity of the target 200. The electrode plate 131 may set the target 200 as a virtual ground and set the electrode plate 131 as a predetermined electrode to generate a measurement signal corresponding to the change in capacitance between the electrode plate 131 and the target 200.

The amount of change in capacitance may vary depending on the humidity of the target 200. The electrode plate 131 may output the generated measurement signal to the sensing circuit 135. The electrode plate 131 may include an output pin for outputting a measurement signal. The output pin of the electrode plate 131 may be electrically connected to the input pin of the sensing circuit 135.

The sensing circuit 135 may calculate the humidity of the target 200 based on the measurement signal received from the electrode plate 131.

As shown in FIG. 3D, the sensing circuit 135 may apply a voltage waveform having the same amplitude and phase to each of the electrode plate 131 and the shield 133. As a voltage waveform having the same amplitude and phase is applied to the electrode plate 131 and the shield 133, parasitic capacitance between the electrode plate 131 and the shield 133 may be removed. Accordingly, unnecessary noise may be removed.

Since a voltage having the same amplitude and phase as that of the electrode plate 131 is applied to the shield 133, it may be referred to as an active shield.

The sensing circuit 135 may measure the humidity of the target 200 based on the measurement signal output from the electrode plate 131 after applying the voltage waveform. The sensing circuit 135 may store a table in a memory (not shown) representing the matching relationship between humidity and the amount of change in capacitance included in the measurement signal. The sensing circuit 135 may extract humidity matching the amount of change in capacitance using the table.

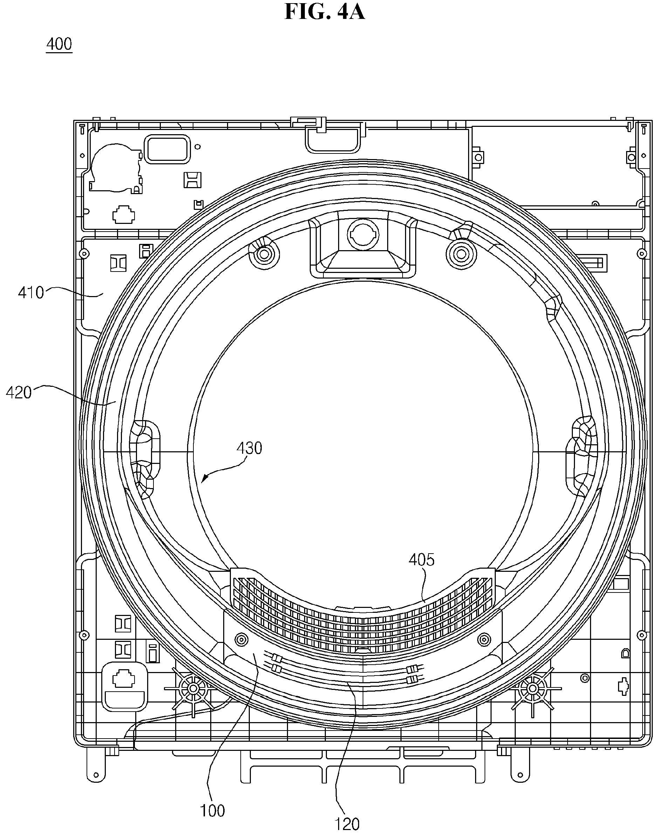

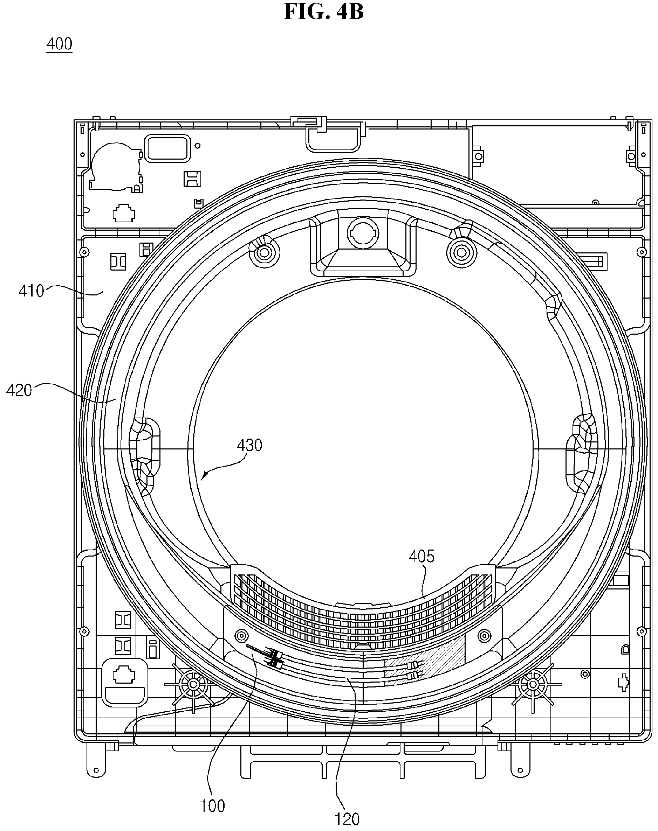

FIGS. 4A and 4B are diagrams showing a state in which a dryness sensing device according to an embodiment of the present disclosure is mounted inside a dryer.

FIGS. 4A and 4B are diagrams of the dryer 400 viewed from the inside to the outside. FIG. 4A is a diagram showing the front of the dryness sensing device 100, and FIG. 4B is a diagram showing a state where the second sensor 130 is transparent at the front of the dryness sensing device 100.

The dryer 400 may include a cabinet 410 that forms an exterior of the dryer 400, a tub 420 provided inside the cabinet 410 to provide a receiving space, a drum 430 that accommodates laundry, and a dust filter 450 and a dryness sensing device 100. The dryer 400 may further include a dryeness processor(not shown) for drying laundry. The dryer may remove humidity from laundry by generating heat inside the drum 430.

The tub 420 may have an opening at the front and may be configured to accommodate the drum 430. The drum 430 may be provided inside the tub 420 and be rotatable.

A dust filter 450 that may filter dust generated during the drying process of laundry and a dryness sensing device 100 that senses the dryness of laundry may be provided at the bottom of the tub 420.

The dryness sensing device 100 may measure the dryness of the surface of the laundry through the first sensor 120 during the drying process and measure the dryness of the interior of the laundry through the second sensor 130.

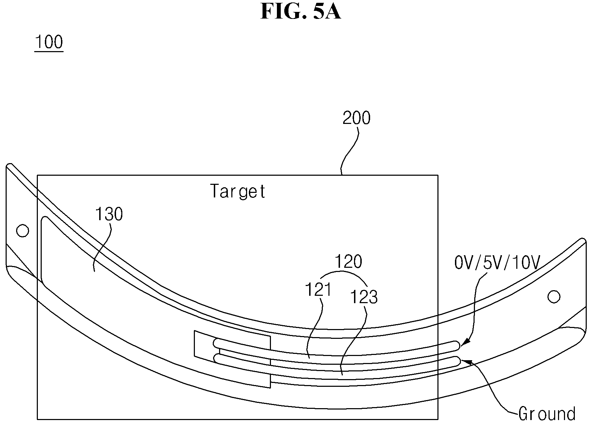

FIGS. 5A to 5C are diagrams illustrating the effect on the second sensor as voltage is applied to the first sensor when the dryness sensing device does not have a shield and when the dryness sensing device has a shield.

FIG. 5A is a drawing illustrating a situation in which each of voltages of 0V, 5V, and 10V is applied to the first electrode 121 of the first sensor 120 of the dryness sensing device 100, and the second electrode 123 is used as a ground electrode.

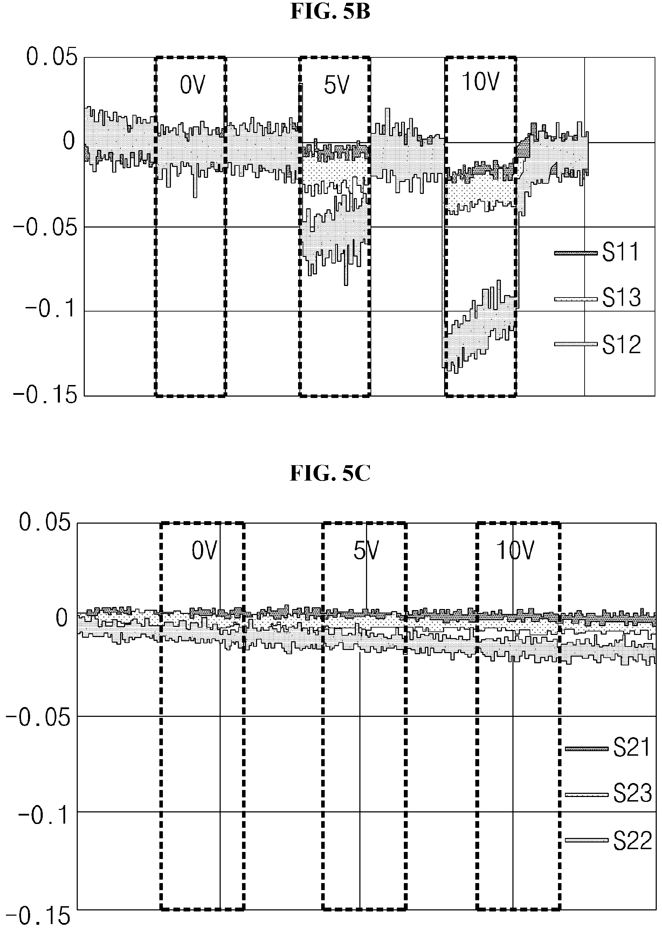

FIG. 5B is a diagram showing changes in capacitance (S11, S12, and S13) measured at each of the three electrode plates provided in the second sensor 130 when there is no shield 133 in the dryness sensing device 100, and FIG. 5C shows the change in capacitance (S21, S22, S23) measured at each of the three electrode plates provided in the second sensor 130 when the shield 133 is present in the dryness sensing device 100.

FIGS. 5A to 5C, the second sensor 130 will be described assuming that it is composed of three electrode plates including a first electrode plate, a second electrode plate, and a third electrode plate.

The x-axis of each graph may be the time axis, and the vertical axis may be the capacitance change amount.

A first graph (S12) showing the change in capacitance measured on the second electrode plate when the shield 133 is not provided, and a second graph (S22) showing the change in capacitance measured on the second electrode plate when the shield 133 is provided are compared.

When 0V is applied to the first electrode 121 of the first sensor 120, there is no significant difference, but when 5V is applied, there is a significant difference in the amount of capacitance change between the first graph (S12) and the second graph (S22) was obtained through experiment.

That is, when the shield 133 is present, the amount of capacitance change measured at the second electrode plate is much smaller than when the shield 133 is not present.

In addition, it was experimentally found that when 10V is applied to the first electrode 121 of the first sensor 120, a larger difference occurs in the amount of capacitance change between the first graph S12 and the second graph S22.

The amount of capacitance change measured at the first electrode plate and the third electrode plate is also greater in the case without the shield 133 than in the case with the shield 133.

As such, according to an embodiment of the present disclosure, when the dryness sensing device 100 is provided with the shield 133, it was confirmed that the capacitance was affected only by the target located on the electrode plate of the second sensor 130 regardeless of the value of the voltage applied to the first electrode 121 of the first sensor 120.

That is, due to the arrangement relationship of the first sensor 120 and the second sensor 130 and the arrangement of the shield 133, the effect of the electric field generated in the first sensor 120 on the second sensor 130 can be minimized. Accordingly, the characteristics of the target acquired by each of the first sensor 120 and the second sensor 130 may be accurately measured.

A dryness sensing device 100 configured to sense a dryness of a laundry according to an embodiment of present disclosure may comprise a case 110 having a length and a thickness; a first sensor 120 disposed on a first side of the case and configured to measure a resistance to sense a surface dryness of the laundry, and a second sensor 130 is disposed on a second side of the case facing the first side and configured to measure a capacitance to sense an internal dryness of the laundry, wherein the first sensor 120 and an electrode plate 131 provided in the second sensor 130 are arranged so as not to overlap each other in a thickness direction of the case 110.

The electrode plate provided in the first sensor 120 and the second sensor 130 are arranged so as not to overlap in the thickness direction and a longitudinal direction of the case 110.

The second sensor 130 further comprise a shield 133 formed to cover the electrode plate 131.

The shield 133 may comprise a first shield electrode 133a formed to cover a side surface of the electrode plate 131, and a second shield electrode 133b formed to cover a rear surface of the electrode plate 131.

The shield 133 is made of the same material as the electrode plate 131.

The second sensor 130 may further comprise a sensing circuit 135, the sensing circuit 135 may apply a voltage waveform with the same amplitude and phase to the electrode plate 131 and the shield 133.

The sensing circuit 135 may receive a first measurement signal corresponding to the resistance from the first sensor, obtain the surface dryness of the laundry based on the received first measurement signal, receive a second measurement signal corresponding to an amount of capacitance change from the electrode plate, and obtain the internal dryness of the laundry based on the measurement signal.

The second sensor 130 may further comprise a substrate 137 on which the electrode plate 131 and the shield 133 are mounted.

The case 110 may comprie a front case 110a on which the first sensor 120 is disposed and a rear case 110b fastened to the front case 110a, the first sensor 120 and the electrode plate 131 provided in the second sensor 130 are arranged so as not to overlap each other in the thickness direction of the front case 110a.

Partial area excluding the electrode plate 131 provided in the second sensor 130 overlaps with the first sensor 120 in the thickness direction.

A dryness sensing device configured to sense a dryness of a laundry according to an another embodiment of present disclosure may comprise a case 110 having a length and a thickness; a first sensor 120 disposed on a first side of the case and configured to measure a resistance to sense a surface dryness of the laundry; and a second sensor 130 is disposed on a second side of the case facing the first side and configured to measure a capacitance to sense an internal dryness of the laundry, wherein the second sensor 130 further comprises a shield 133 formed to cover an electrode plate 131 included in the second sensor 130.

Meanwhile, the embodiments disclosed in the present disclosure are not intended to limit the technical idea of the present disclosure but are for explanation, and the scope of the technical idea of the present disclosure is not limited by these embodiments.

The scope of protection of this disclosure should be interpreted in accordance with the claims below, and all technical ideas within the equivalent scope should be interpreted as being included in the scope of right of this disclosure.

## Claims

1. A dryness sensing device (100) configured to sense a dryness of a laundry, comprising:
a case (110) having a length and a thickness;
a first sensor (120) disposed on a first side of the case and configured to measure a resistance to sense a surface dryness of the laundry; and
a second sensor (130) disposed on a second side of the case (110) facing the first side and configured to measure a capacitance to sense an internal dryness of the laundry,
**characterized in that**
the first sensor (120) and an electrode plate (131) provided in the second sensor (130) are arranged so as not to overlap each other in a thickness direction of the case (110).

2. The dryness sensing device (100) of claim 1, wherein the first sensor and the electrode plate (131) provided in the second sensor (130) are arranged so as not to overlap in the thickness direction and a longitudinal direction of the case (110).

3. The dryness sensing device (100) of claim 1 or 2, wherein the second sensor (130) further comprises a shield (133) formed to cover the electrode plate (131).

4. The dryness sensing device (100) of claim 3, wherein the shield (133) comprises:
a first shield electrode (133a) formed to cover a side surface of the electrode plate (131), and
a second shield electrode (133b) formed to cover a rear surface of the electrode plate (131).

5. The dryness sensing device (100) of claim 3 or 4, wherein the shield (133) is made of the same material as the electrode plate (131).

6. The dryness sensing device (100) of one of claims 3 to 5, wherein the second sensor (130) further comprises a sensing circuit (135),
wherein the sensing circuit (135) is configured to apply a voltage waveform with the same amplitude and phase to the electrode plate (131) and the shield (133).

7. The dryness sensing device (100) of claim 6, wherein the sensing circuit (135) is configured to:
receive a first measurement signal corresponding to the resistance from the first sensor (120),
obtain the surface dryness of the laundry based on the received first measurement signal,
receive a second measurement signal corresponding to an amount of capacitance change from the electrode plate (131), and
obtain the internal dryness of the laundry based on the second measurement signal.

8. The dryness sensing device (100) of one of claims 3 to 7, wherein the second sensor (130) further comprises:
a substrate (137) on which the electrode plate (131) and the shield (133) are mounted.

9. The dryness sensing device (100) of one of claims 1 to 8, wherein the case (110) comprises a front case (110a) on which the first sensor (120) is disposed and a rear case (110b) fastened to the front case (110a),
wherein the first sensor (120) and the electrode plate (131) provided in the second sensor (130) are arranged so as not to overlap each other in the thickness direction of the front case (110a).

10. The dryness sensing device (100) of claim 9, wherein the first sensor (120) comprises a first electrode (121) and a second electrode 123, each of the first electrode (121) and the second electrode (123) are formed to intersect a center line (CL) of the front case (110a).

11. The dryness sensing device (100) of one of claims 1 to 9, wherein a partial area excluding the electrode plate (131) provided in the second sensor (130) overlaps with the first sensor (120) in the thickness direction.

12. The dryness sensing device (100) of one of claims 1 to 11, wherein a plurality of electrode plates (131) are provided in the second sensor 130.

13. The dryness sensing device (100) of claim 12, wherein the plurality of electrode plates (131) include a central electrode plate disposed in the center, an upper electrode plate disposed above the central electrode plate, and a lower electrode plate disposed below the central electrode plate.

14. The dryness sensing device (100) of one of claims 1 to 13, further comprising:
a waterproof layer (170) having a waterproof function and covering the second sensor (130).

15. The dryness sensing device (100) of one of claims 1 to 14, wherein the second sensor (130) is a capacitive sensor.
